# DEMANDE DE BREVET EUROPEEN

(11) **EP 4 213 024 A1**
(43) Date de publication de la demande: **19.07.2023**
(21) Numéro de dépôt: 22305025.3
(22) Date de dépôt: 12.01.2022
(51) Int. Cl.: G06F 9/54, H04L 12/64, G06F 15/167

(54) **PROCÉDÉ DE PARTAGE D'IMAGE, PROGRAMME D'ORDINATEUR ET SYSTÈME METTANT EN OEUVRE UN TEL PROCÉDÉ**

(71) Demandeur: Bull SAS, 78340 Les Clayes-sous-Bois (FR)
(72) Inventeur: DUTRECH, Florent, 38130 ECHIROLLES (FR)
(74) Mandataire: IPAZ

(57) **Abrégé**

L'invention concerne un procédé de partage d'une image (110) entre une entité informatique (102), dite entité serveur, et au moins une autre entité informatique (104₁-104ₙ;304₁-304ₘ), dite entité client, comprenant les étapes suivantes pour le partage d'une image entre ladite entité serveur (102) et chaque entité client (104₁-104ₙ;304₁-304ₘ) :
-écriture de ladite image (110) dans une zone mémoire partagée (106;306), préalablement allouée, et accessible à la fois par ladite entité serveur (102) et par ladite entité client (104₁-104ₙ;304₁-304ₙ),
-transmission à ladite entité client (104₁-104ₙ;304₁-304ₘ) d'une adresse de ladite image (110) mémorisée dans ladite zone mémoire (106;306), et
- lecture par ladite entité client (104₁-104ₙ;304₁-304ₘ) de ladite image (110) écrite dans ladite zone mémoire partagée (106;306).

Elle concerne également un programme d'ordinateur et un système mettant en œuvre un tel procédé.

## Description

La présente invention concerne un procédé de partage d'images entre des entités informatiques, chacune des entités informatiques pouvant être une entité physique, c'est-à-dire matérielle, ou une entité logicielle. Elle concerne également un programme d'ordinateur et un système mettant en œuvre un tel procédé.

Le domaine de l'invention est de manière générale le domaine du partage d'images, ou d'un flux d'images, entre des entités informatiques.

### État de la technique

Le traitement d'image est présent dans de plus en plus d'applications. Par exemple, l'identification d'objets ou la ré-identification de personnes, dans le cadre par exemple du suivi d'une personne, est basée sur le traitement d'images prises par des caméras. Le traitement d'image est également présent dans le domaine industriel, par exemple pour la vérification de la qualité de fabrication ou encore pour assister un opérateur lors d'une tâche de maintenance.

Le traitement d'image nécessite la prise d'images, ou de flux vidéo, et leur traitement par des applications. Il arrive très souvent qu'une même image soit traitée en parallèle par plusieurs processus, également appelés microservices, dans le cadre d'une même application. Par exemple, dans le cadre de la ré-identification d'objets, une même image peut être traitée par un premier microservice pour détecter une zone d'objet, puis par un autre microservice pour en calculer sa signature, etc. Ainsi, une copie de l'image est transmise à chacune des microservices informatiques de sorte qu'il est réalisé autant de copie et de transmission d'une image qu'il y a de microservices.

Or, la copie et la transmission d'une image est gourmand en énergie, en ressources de calcul et de communication, et en temps de calcul. Les ressources impliquées pour réaliser une copie de l'image et la transmettre vers une entité informatique ne sont alors pas disponibles pour les autres processus ou microservices, ce qui est très pénalisant.

Un but de la présente invention est de remédier à au moins un des inconvénients de l'état de la technique.

Un autre but de l'invention est de proposer une solution de partage d'une image entre entités informatiques qui est moins gourmand en ressources informatiques.

Il est aussi un but de l'invention de proposer une solution de partage d'une image entre entités informatiques qui est plus rapide.

### Exposé de l'invention

L'invention propose d'atteindre au moins l'un des buts précités par un procédé de partage d'une image entre une entité informatique, dite entité serveur, et au moins une autre entité informatique, dite entité client, comprenant les étapes suivantes pour le partage d'une image entre ladite entité serveur et chaque entité client :
- écriture de ladite image dans une zone mémoire partagée, préalablement allouée, et accessible à la fois par ladite entité serveur et par ladite entité client,
- transmission, en particulier par ladite entité serveur, à ladite entité client d'une adresse de ladite image mémorisée dans ladite zone mémoire, et
- lecture par ladite entité client de ladite image écrite dans ladite zone mémoire partagée.

Ainsi, la présente invention propose de partager une image entre une entité serveur et une ou plusieurs entité clients, tout en évitant de réaliser une copie de l'image et une transmission de ladite image vers chaque entité client. A la place, l'invention propose de mémoriser l'image dans une zone mémoire partagée, accessible à la fois par l'entité serveur et par chaque entité client. Ainsi, l'entité serveur peut écrire l'image dans la zone mémoire partagée et chaque entité client peut lire l'image depuis ladite zone mémoire. Ainsi, le partage d'une image selon l'invention nécessite moins de ressources de calcul et de communication, et est réalisée de manière plus rapide.

En effet, dans les solutions actuelles, le partage d'une image entre une entité serveur et une entité client nécessite que l'entité serveur réalise une copie de l'image, sérialise la copie de l'image, transmette l'image vers l'entité client au travers d'une connexion, et enfin que l'entité client reconstruise l'image par une dé-sérialisation des données reçues. Toutes ces opérations sont gourmandes en ressources de calcul et en bande passante, et doivent être réalisées autant de fois qu'il y a d'entités client. La présente invention permet d'éviter ces opérations puisque chaque entité client reçoit, non pas une copie de l'image, mais des données représentant l'adresse de l'image dans une zone mémoire partagée par l'entité serveur et chaque entité client. On comprend que le partage d'une image entre l'entité serveur et plusieurs entités client permet une plus grande économie de ressources puisque l'image, copiée une seule fois dans la zone mémoire, peut être lue par plusieurs entités client disposant chacune de l'adresse de l'image dans ladite zone mémoire partagée.

Dans la présente demande, par « entité serveur » on entend toute entité informatique, physique ou virtuelle, pouvant partager une image avec une autre entité physique ou virtuelle. Une entité serveur peut être un serveur physique ou virtuel, une machine physique ou virtuelle, un ordinateur, une tablette, une caméra, un processus informatique, un programme informatique, etc. En particulier, l'entité serveur peut être un microservice informatique.

Dans la présente demande, par « entité client » on entend toute entité informatique, physique ou virtuelle, pouvant recevoir et traiter une image. Une entité client peut être un serveur physique ou virtuel, une machine physique ou virtuelle, un ordinateur, une tablette, une caméra, un processus informatique, un programme informatique, etc. En particulier, l'entité client peut être un microservice informatique.

Dans des modes de réalisation l'entité serveur peut être une entité logicielle, telle que par exemple une machine virtuelle, un serveur virtuel, un programme informatique, une application, un processus, un microservice d'une application, etc.

Dans des modes de réalisation l'entité serveur peut être une entité matérielle, tel qu'une caméra, un serveur, un ordinateur, une tablette, un Smartphone, un processeur, un calculateur, une puce informatique, etc.

Dans des modes de réalisation, l'entité client peut être une entité logicielle, telle que par exemple une machine virtuelle, un serveur virtuel, un programme informatique, une application, un processus, un microservice d'une application, etc.

Dans des modes de réalisation, l'entité client peut être une entité matérielle, tel qu'un serveur, un ordinateur, une tablette, un Smartphone, un processeur, un calculateur, une puce informatique, etc.

Dans des modes de réalisation avantageux, la zone mémoire partagée peut comprendre, ou consister en, une zone d'une mémoire RAM (« RAM » pour « Random Access Memory »). Une telle mémoire présente l'avantage d'être plus rapidement accessible qu'une mémoire morte ou un disque dur.

Une telle mémoire RAM peut être une mémoire de type SSD.

De manière générale, la mémoire partagée est allouée dans un emplacement du système d'exploitation particulier, qui est lui-même situé soit directement en RAM, soit sur disque (préférablement SSD).

Dans des modes de réalisation avantageux, la zone mémoire partagée peut comprendre, ou consister en, une zone d'une mémoire ROM (pour « Read-Only Memory »).

Une telle mémoire présente l'avantage que la copie de l'image restera présente même lorsqu'elle n'est plus alimentée. L'image sera donc accessible plus longtemps.

Une telle mémoire peut être un disque dur, une mémoire de type SSD, etc. de manière générale, une telle mémoire peut être tout type de mémoire informatique.

La zone mémoire partagée peut être commune à au moins deux, et en particulier à toutes les, entités clients.

Alternativement, ou en plus, au moins une zone mémoire partagée peut être individuelle et dédiée à une entité client.

Le procédé selon l'invention peut en outre comprendre une étape d'allocation de la zone mémoire partagée, avant la première itération de l'étape de partage d'une image avec une entité client.

La zone mémoire partagée peut être une partie ou la totalité d'une zone mémoire globale qui est allouée à l'entité serveur lorsque ladite entité serveur est exécutée sur machine. La zone mémoire globale peut être allouée à l'entité serveur par un système d'exploitation d'une machine sur laquelle l'entité serveur est exécutée

La, ou chaque, zone mémoire partagée peut être allouée, déclarée ou réservée de manière classique. En particulier, la zone mémoire partagée peut être une zone mémoire accessible uniquement en fonction des droits de lecture et d'écriture. Dans ce cas, l'entité serveur peut disposer au moins de droits d'écriture dans la zone mémoire et la, ou chaque, entité client peut disposer des droits de lecture de ladite zone mémoire.

Par exemple, l'entité serveur peut réserver une partie de la mémoire globale qui lui est allouée comme zone mémoire partagée. Dans ce cas, l'entité serveur attribue des droits de lecture à chaque entité client sur cette partie de la mémoire globale de sorte que chaque entité client peut y accéder et lire une image.

Le procédé selon l'invention peut en outre comprendre une étape de communication, en particulier par l'entité serveur, à l'entité client d'un identifiant de la zone mémoire partagée.

Ainsi, lorsque l'entité client reçoit l'adresse de l'image dans la zone mémoire partagée, elle peut accéder à l'image car elle dispose à la fois de l'identifiant de la zone mémoire partagée et l'adresse de l'image dans la zone mémoire.

L'identifiant de la zone mémoire partagée peut être communiquée à l'entité client en même temps que l'étape de transmission de l'adresse de l'image dans la zone mémoire partagée. Dans ce cas, suivant un exemple de réalisation, l'identifiant de la zone mémoire partagée peut être communiquée à l'entité client lors de la première itération de l'étape de transmission de l'adresse de l'image, c'est-à-dire lors d'une première partage d'image : cet identifiant peut alors être utilisée lors de partage(s) d'image suivants. Suivant un autre exemple de réalisation, l'identifiant de la zone mémoire partagée peut être communiquée à l'entité client lors de chaque itération de l'étape de transmission de l'adresse de l'image, c'est-à-dire lors de chaque partage d'image.

Alternativement, l'identifiant de la zone mémoire partagée peut être communiquée à l'entité client préalablement à la première itération de l'étape de transmission. Par exemple, l'identifiant de la zone mémoire peut être communiquée à l'entité client lors d'une étape d'enrôlement de l'entité client auprès de l'entité serveur.

Suivant des modes de réalisation, l'entité serveur et l'entité client peuvent se trouver sur une même machine physique. Dans ce cas, la zone mémoire partagée peut aussi se trouver sur ladite même machine physique que l'entité serveur et l'entité client, ou être locale à ladite même machine physique.

Une telle machine physique peut être tout type d'appareil informatique tel que par exemple un serveur, un ordinateur, etc.

Suivant des modes de réalisation, l'entité serveur peut se trouver sur une première machine physique et l'entité client peut se trouver sur une deuxième machine physique différente de ladite première machine, ledit procédé comprenant en outre une étape de transmission d'une copie de l'image de ladite première machine à ladite deuxième machine.

Une telle étape de transmission de l'image de la première machine à la deuxième machine peut être réalisée de manière classique. Par exemple, l'image peut être copiée et sérialisée au niveau de la première machine, puis transmise de la première machine à la deuxième machine, au travers d'une connexion filaire ou sans fil. Les données d'image reçues au niveau de la deuxième machine peuvent alors être dé-sérialisées pour reconstruire l'image.

Dans le cas où, l'entité serveur se trouve sur une première machine physique et l'entité client se trouve sur une deuxième machine physique différente de la première machine, la zone mémoire partagée peut se trouver sur ladite deuxième machine physique, ou peut être locale à ladite deuxième machine physique.

Dans ce cas, l'image reçue de l'entité serveur est mémorisée au niveau de la deuxième machine. L'entité client reçoit une adresse de l'image dans la zone mémoire partagée se trouvant sur la deuxième machine.

Suivant un exemple de réalisation nullement limitatif, et sans perte de généralité, le procédé selon l'invention peut comprendre les étapes suivantes lorsque l'entité serveur et l'entité client se trouvent sur la même machine physique :
- réservation/allocation, par le serveur, d'une zone mémoire prévue pour constituer la zone mémoire partagée,
- une étape optionnelle d'enrôlement de l'entité client auprès de l'entité serveur, cette étape d'enrôlement comprenant l'attribution de droits de lecture de la zone mémoire partagée à ladite entité client et la communication à l'entité client de l'identifiant de ladite zone mémoire partagée,
- une étape optionnelle d'émission par l'entité client d'une requête demandant une image à l'entité serveur,
- écriture de l'image dans la zone mémoire partagée,
- transmission par l'entité serveur de l'adresse de l'image à l'entité client, et
- lecture de l'image dans la zone de mémoire, par l'entité client.

Suivant un exemple de réalisation nullement limitatif, et sans perte de généralité, le procédé selon l'invention peut comprendre les étapes suivantes lorsque l'entité serveur et l'entité client se trouvent, respectivement, sur une première et une deuxième machines physiques différentes :
- réservation/allocation, sur la deuxième machine physique, d'une zone mémoire prévue pour constituer la zone mémoire partagée,
- une étape optionnelle d'enrôlement de l'entité client auprès de l'entité serveur, cette étape d'enrôlement comprenant l'attribution de droits de lecture de la zone mémoire partagée à ladite entité client et la communication à ladite entité client de l'identifiant de ladite zone mémoire partagée,
- une étape optionnelle d'émission par l'entité client d'une requête demandant une image à l'entité serveur,
- transmission de l'image de la première machine vers la deuxième machine,
- écriture de l'image dans la zone mémoire partagée au niveau de la deuxième machine,
- transmission de l'adresse, dans la zone mémoire partagée, de l'image à l'entité client, et
- lecture de l'image dans la zone de mémoire, par l'entité client.

Selon un autre aspect de l'invention, il est proposé un programme d'ordinateur comprenant des instructions exécutables qui, lorsqu'elles sont exécutées par un appareil informatique, mettent en en œuvre toutes les étapes du procédé de partage d'image selon l'invention.

Le programme d'ordinateur peut être en tout langage informatique, tel que par exemple en langage machine, en C, C++, JAVA, Python, etc.

Selon un autre aspect de l'invention, il est proposé un système de partage d'image comprenant :
- une première entité informatique, dite entité serveur,
- au moins une deuxième entité informatique, dite entité client, et
- une zone mémoire partagée ;
configurés pour mettre en œuvre toutes les étapes du procédé selon l'invention.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un premier exemple de réalisation non limitatif d'un système de partage d'image entre une entité serveur et une entité client selon l'invention ;
- la FIGURE 2 est une représentation schématique d'un premier exemple de réalisation non limitatif d'un procédé de partage d'image entre une entité serveur et une entité client selon l'invention ;
- la FIGURE 3 est une représentation schématique d'un deuxième exemple de réalisation non limitatif d'un système de partage d'image entre une entité serveur et une entité client selon l'invention ; et
- la FIGURE 4 est une représentation schématique d'un deuxième exemple de réalisation non limitatif d'un procédé de partage d'image entre une entité serveur et une entité client selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

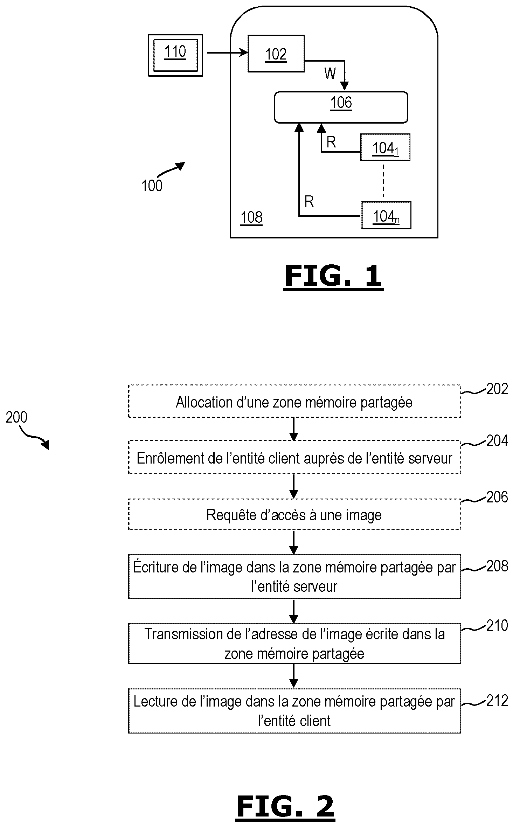

La FIGURE 1 est une représentation schématique d'un premier exemple de réalisation non limitatif d'un système de partage d'image selon la présente invention.

Le système 100 de la FIGURE 1 peut être utilisé pour partager une image entre une entité informatique 102, dite entité serveur 102, et une ou plusieurs entités informatiques 104₁-104ₙ, dites entités client, avec n≥1.

Le système 100 comprend en outre une zone mémoire partagée 106 accessible à la fois par l'entité serveur 102 et chaque entité client 104₁-104₂.

Dans le système 100, l'entité serveur 102 et chaque entité client 104i et la zone mémoire partagée 106 se trouvent sur la même machine physique 108.

La machine physique 108 peut être tout type de machine informatique tel qu'un serveur, un ordinateur, une tablette, etc.

L'entité serveur 102 peut être toute entité informatique, physique ou virtuelle, pouvant partager une image avec une autre entité physique ou virtuelle. L'entité serveur 100 peut être un serveur physique ou virtuel, une machine physique ou virtuelle, un ordinateur, une tablette, une caméra, un processus informatique, un programme informatique, etc.

En particulier, l'entité serveur 102 est un microservice informatique exécuté sur la machine 108. Lorsque l'entité serveur 102 est exécutée sur la machine 108, une zone mémoire lui est allouée sur ladite machine 108. La zone mémoire partagée 106 peut être une partie ou la totalité de la zone mémoire que la machine 108 alloue à l'entité serveur 102.

Chaque entité client 104i peut être toute entité informatique, physique ou virtuelle, pouvant recevoir et traiter une image. Chaque entité client 104i peut être un serveur physique ou virtuel, une machine physique ou virtuelle, un ordinateur, une tablette, une caméra, un processus informatique, un programme informatique, etc. En particulier, chaque entité client 104i est un microservice informatique exécuté sur la machine 108.

La zone mémoire partagée 106 peut être tout type de mémoire tel que décrit plus haut. Par exemple, la zone mémoire partagée peut être une partie ou la totalité d'une mémoire vive, ou RAM en anglais, de type SSD.

Dans l'exemple représenté, la zone mémoire partagée 106 est commune à toutes les entités client 104₁-104ₙ. Bien entendu, suivant des alternatives, à au moins une des entités client 104i peut être associée une zone mémoire partagée dédiée qui n'est accessible que par ladite entité client et l'entité serveur.

La zone mémoire partagée 106 est accessible, au moins en écriture, par l'entité serveur 102 et au moins en lecture par chaque entité client 104i. Ainsi, l'entité serveur 102 peut écrire une image 110, ou une copie de l'image 110, dans la zone mémoire partagée 108 et chaque entité client 104i peut y lire ladite image 110. Ainsi, le système de partage 100 permet d'éviter de réaliser et d'envoyer autant de copies de l'image 110 qu'il y a d'entités clients, diminuant ainsi drastiquement les ressources en calcul et en communication, ainsi que l'énergie consommée, pour partager une image avec une ou plusieurs entités client 104₁-104ₙ.

L'image 110 peut être transmise à l'entité serveur 102 par :
- un appareil de captation d'image ou de flux vidéo, telle qu'une caméra, distante ou locale à l'entité serveur 102 ; ou
- toute entité informatique physique ou virtuelle.

Alternativement, l'image 110 peut être lue par l'entité serveur 102 depuis une base de données distante ou locale.

Suivant un exemple de réalisation nullement limitatif, la zone mémoire partagée 106 peut être une partie ou la totalité de la zone mémoire qui est allouée à l'entité serveur 102 par la machine 108, et en particulier le système d'exploitation de la machine 108, sur laquelle ladite entité serveur 102 est exécutée, au démarrage de ladite entité serveur 102. Par exemple, l'entité serveur 102 peut choisir de partitionner la zone mémoire qui lui est allouée par la machine 108 pour créer au moins une partition destinée à être la zone mémoire partagée 106.

La FIGURE 2 est une représentation schématique d'un premier exemple de réalisation non limitatif d'un procédé de partage d'image selon la présente invention.

Le procédé 200 de la FIGURE 2 peut être utilisé pour partager des images entre une entité serveur et une ou plusieurs entités clients qui sont exécutées sur une même machine physique, et en particulier dans le système 100 de la FIGURE 1.

Le procédé 200 comprend une étape 202 d'allocation d'une zone mémoire, qui sera utilisée comme zone mémoire partagée entre l'entité serveur et chaque entité client. Lors de cette étape 202, la zone mémoire est définie et réservée pour le partage d'image. De plus, l'entité serveur se voit attribuée de droits d'accès à la zone mémoire comprenant au moins des droits d'écriture pour lui permettre d'écrire des images dans ladite zone mémoire.

L'étape 202 d'allocation d'une zone mémoire peut par exemple être réalisée par l'entité serveur elle-même, ou par un système d'exploitation de la machine physique sur laquelle est exécutée l'entité serveur.

L'étape 202 d'allocation de la zone de mémoire peut être réalisée lors du démarrage de l'entité serveur.

L'étape 202 d'allocation de la zone de mémoire peut être réalisée une seule fois pour toutes les entités client, en particulier lorsque la zone mémoire partagée et commune à toutes les entités client.

Le procédé 200 comprend en outre une étape 204, optionnelle, d'enrôlement d'une entité client auprès de l'entité serveur. Lors de cette étape l'entité client émet une requête d'enrôlement comprenant au moins un identifiant de l'entité client. En réponse à cette requête, l'entité serveur communique à l'entité client un identifiant de la zone mémoire partagée allouée lors de l'étape 202. Cette étape 204 est résiliée pour chaque entité client.

L'étape 204 d'enrôlement est réalisée une seule fois pour chaque entité client souhaitant demander des images à l'entité serveur.

L'étape d'enrôlement 204 peut comprendre une attribution, par l'entité serveur, de droits d'accès, et en particulier de droits en lecture, à l'entité client sur une partie ou la totalité de la zone mémoire partagée.

Le procédé 200 peut comprendre une étape 206, optionnelle, lors de laquelle une entité client émet une requête demandant une image à l'entité serveur. La requête peut comprendre un identifiant de l'image, et plus généralement au moins une donnée permettant à l'entité serveur d'identifier l'image demandée par l'entité client.

Alternativement, l'image peut être partagée avec l'entité client sans requête de la part de l'entité client. Par exemple, l'entité serveur peut être configurée pour partager une image avec l'entité client dès qu'elle reçoit une image, par exemple en provenance d'une caméra. Suivant une autre alternative, la requête peut être émise par une entité tierce, telle que par exemple une entité informatique contrôlant le fonctionnement de l'entité client.

Le procédé 200 comprend une étape 208 lors de laquelle l'entité serveur écrit l'image demandée par l'entité client dans la zone mémoire partagée. Lors de cette étape, si l'entité serveur ne dispose pas de l'image, elle peut la récupérer, par exemple dans une base de données ou auprès d'un appareil d'acquisition d'image tel qu'une caméra.

Lors d'une étape 210, l'entité serveur communique à l'entité client l'adresse de l'image écrite dans la zone mémoire partagée, par exemple dans un message envoyé à l'entité client.

Lors d'une étape 212, l'entité client reçoit l'adresse de l'image, accède à la zone mémoire partagée et lit l'image écrite dans la zone mémoire partagée.

Ainsi, l'image a été partagée par l'entité serveur avec l'entité client sans transmission d'une copie de l'image dans un message adressé à l'entité client. L'entité client peut alors réaliser le traitement qu'il souhaite sur l'image partagée, optionnellement après avoir copiée l'image.

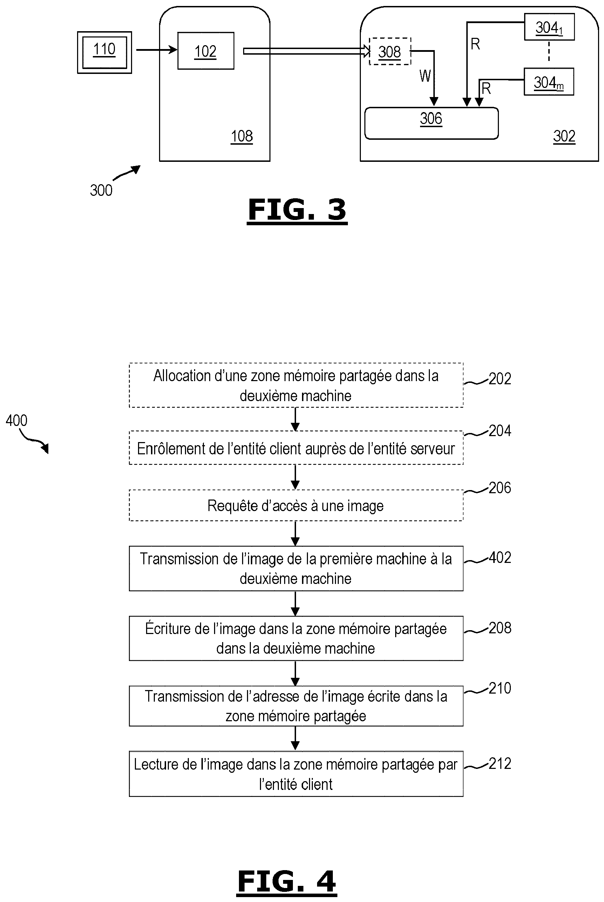

La FIGURE 3 est une représentation schématique d'un deuxième exemple de réalisation non limitatif d'un système de partage d'image selon la présente invention.

Le système 300 de la FIGURE 3 comprend l'entité serveur 102 se trouvant sur la machine physique 108, différente d'une machine physique 302 sur laquelle se trouve(nt) une ou plusieurs entités informatiques 304₁-304ₘ, dites entités client, avec m≥1.

Les machines 106 et 302 sont en communication entre elles, au travers d'une connexion filaire ou sans fil, et en particulier au travers du réseau Internet.

Chaque machine 106 et 302 peut tout type de machine telle qu'un serveur, un ordinateur, une tablette, etc.

Le système 300 comprend une zone mémoire partagée 306, similaire ou identique à la zone mémoire partagée 106, se trouvant sur la deuxième machine 302.

Cette zone mémoire partagée 306 peut être écrite par l'entité serveur 102 directement, par exemple lorsque l'entité serveur 102 et la zone mémoire 106 se trouvant sur un réseau privé, ou un réseau privé virtuel.

Dans l'exemple représenté, le système 300 comprend en outre, sur la deuxième machine 302, un module 308, optionnel. Ce module 308 est configuré pour écrire dans la zone mémoire partagée 306 les images envoyées par l'entité serveur 102. Ainsi, lorsqu'une image doit être partagée par l'entité serveur 102 avec une entité client 304ⱼ, elle est transmise par ladite entité serveur 102 au module 308 qui l'écrit dans la zone mémoire partagée 306. L'adresse de l'image dans la zone mémoire partagée 306 est communiquée à l'entité client 304ᵢ soit par le module 308, soit par l'entité serveur 102 qui l'obtient préalablement du module 308.

Le module 308 peut être tout type d'entité informatique, et en particulier une application informatique ou un programme d'ordinateur. Le module 308 peut par exemple être une entité serveur au même titre que l'entité serveur 102. Plus encore, le module 308 peut par exemple être une image de l'entité serveur 102.

Ainsi, l'image écrite dans la zone mémoire est transmise une seule fois de l'entité serveur 102 vers la zone mémoire partagée 306, et par conséquent de la machine 106 vers la machine 302, et elle peut être accédée par plusieurs entités client 304ⱼ se trouvant sur la deuxième machine 302.

Suivant un exemple de réalisation nullement limitatif, la zone mémoire partagée 306 peut être une partie ou la totalité de la zone mémoire qui est allouée au module 308 par la machine 302, et en particulier le système d'exploitation de la machine 302, sur laquelle ledit module 308 est exécuté, au démarrage dudit module 308. Par exemple, le module 308 peut choisir de partitionner la zone mémoire qui lui est allouée par la machine 302 pour créer au moins une partition destinée à être la zone mémoire partagée 306.

La FIGURE 4 est une représentation schématique d'un deuxième exemple de réalisation non limitatif d'un procédé de partage d'image selon la présente invention.

Le procédé 400 de la FIGURE 4 peut être utilisée pour partager des images entre une entité serveur exécutée sur une première machine physique, telle que par exemple l'entité serveur 102 de la FIGURE 3, et une ou plusieurs entités clients qui sont exécutées sur une deuxième machine physique, telle que par exemple les entités informatiques client 304₁-304ₘ de la FIGURE 3. En particulier, le procédé 400 peut être utilisé pour partager une image dans le système 300 de la FIGURE 3.

Le procédé 400 comprend toutes les étapes du procédé 200 de la FIGURE 1.

Dans le procédé 400, l'étape 202 réalise une allocation d'une zone mémoire partagée sur la deuxième machine, soit directement par l'entité serveur se trouvant sur la première machine soit par l'intermédiaire d'un module, tel que par exemple le module 308, se trouvant sur la deuxième machine.

De plus, l'étape 208 d'écriture est précédée d'une étape 402 de transmission d'une copie de l'image de la première machine vers la deuxième machine. Lors de cette étape, l'entité serveur sérialise l'image, éventuellement compresse l'image, transmet les données représentant l'image vers la deuxième machine. La deuxième machine, et en particulier le module 308, reçoit les données représentant l'image sous la forme sérialisée, dé-sérialise ces données pour reconstruire l'image.

L'image ainsi reconstruite est écrite dans la zone mémoire partagée lors de l'étape 208, en particulier par le module 308.

Lors de l'étape 210 l'adresse de l'image dans la zone mémoire partagée est transmise à l'entité client, en particulier par le module 308.

L'entité client peut alors accéder à la zone mémoire partagée et lire l'image lors de l'étape 212.

Suivant une autre alternative, les systèmes 100 et 300 peuvent être combinés de sorte qu'une entité serveur, tel que par exemple l'entité serveur 102, peut partager une image à la fois avec des entités clients se trouvant sur la même machine physique que l'entité serveur 102, par exemple les entités clients 104₁-104ₙ, et avec des entités clients se trouvant sur une autre machine physique que l'entité serveur, par exemple les entités clients 304₁-304m.

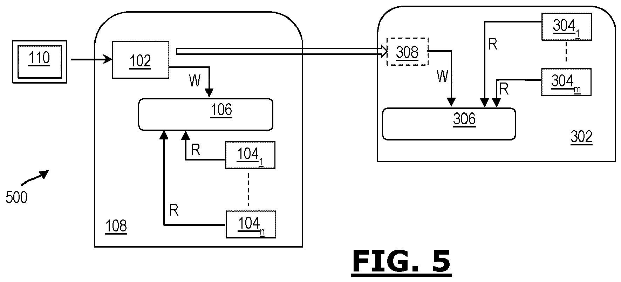

La FIGURE 5 donne une représentation schématique d'un exemple de réalisation non limitatif d'un tel système.

Bien entendu l'invention n'est pas limitée aux exemples qui viennent d'être décrits.

## Revendications

1. Procédé (200;400) de partage d'une image (110) entre une entité informatique (102), dite entité serveur, et au moins une autre entité informatique (104₁-104ₙ;304₁-304ₘ), dite entité client, comprenant les étapes suivantes pour le partage d'une image entre ladite entité serveur (102) et chaque entité client (104₁-104ₙ;304₁-304ₘ) :
- écriture (208) de ladite image (110) dans une zone mémoire partagée (106;306), préalablement allouée, et accessible à la fois par ladite entité serveur (102) et par ladite entité client (104₁-104ₙ;304₁-304ₙ),
- transmission (210) à ladite entité client (104₁-104ₙ;304₁-304ₘ) d'une adresse de ladite image (110) mémorisée dans ladite zone mémoire (106;306), et
- lecture (212) par ladite entité client (104₁-104ₙ;304₁-304ₘ) de ladite image (110) écrite dans ladite zone mémoire partagée (106;306).

2. Procédé (200;400) selon la revendication précédente, **caractérisé en ce que** l'entité serveur (102) est une entité logicielle, ou une entité matérielle.

3. Procédé (200;400) selon l'une quelconque des revendications précédentes, **caractérisé en ce que** l'entité client est une entité logicielle, ou une entité matérielle.

4. Procédé (200;400) selon l'une quelconque des revendications précédentes, **caractérisé en ce que** la zone mémoire partagée (106;306) comprend, ou consiste en, une zone d'une mémoire RAM (« RAM » pour « Random Access Memory »).

5. Procédé (200;400) selon l'une quelconque des revendications précédentes, **caractérisé en ce que** la zone mémoire partagée (106;306) comprend, ou consiste en, une zone d'une mémoire ROM (pour « Read-Only Memory »).

6. Procédé (200;400) selon l'une quelconque des revendications précédentes, **caractérisé en ce qu'**il comprend en outre une étape (204) de communication à l'entité client (104₁-104ₙ;304₁-304ₘ) d'un identifiant de ladite zone mémoire partagée (106;306).

7. Procédé (200) selon l'une quelconque des revendications précédentes, **caractérisé en ce que** l'entité serveur (102) et l'entité client (104₁-104ₙ) se trouvent sur une même machine physique (108), et **en ce que** la zone mémoire partagée (106) se trouve aussi sur ladite même machine physique (108), ou est locale à ladite même machine physique (108).

8. Procédé (400) selon l'une quelconque des revendications précédentes, **caractérisé en ce que** l'entité serveur (102) se trouve sur une première machine physique (108) et l'entité client (304₁-304ₘ) se trouve sur une deuxième machine physique (302) différente de ladite première machine (102), ledit procédé comprenant en outre une étape (402) de transmission d'une copie de l'image de ladite première machine (102) à ladite deuxième machine (302).

9. Procédé (400) selon la revendication précédente, **caractérisé en ce que** la zone mémoire partagée (306) se trouve sur la deuxième machine physique (302), ou est locale à ladite deuxième machine physique (302).

10. Programme d'ordinateur comprenant des instructions exécutables qui, lorsqu'elles sont exécutées par un appareil informatique, mettent en en œuvre toutes les étapes du procédé (200;400) selon l'une quelconque des revendications précédentes.

11. Système (100;300) de partage d'image comprenant :
- une première entité informatique (102), dite serveur,
- une deuxième entité informatique (104₁-104ₙ;304₁-304ₘ), dite client, et
- une zone mémoire partagée (106;306) ;
configurés pour mettre en œuvre toutes les étapes du procédé (200;400) selon l'une quelconque des revendications 1 à 9.
